# EUROPEAN PATENT APPLICATION

(11) **EP 2 335 803 A1**
(43) Date of publication of application: **22.06.2011**
(21) Application number: 09178345.6
(22) Date of filing: 08.12.2009
(51) Int. Cl.: B01D 53/14, B01D 53/24

(54) **An device for absorbing carbon dioxide in the air**

(71) Applicant: Yang, Hsien Ming, Da-an Dist , Taipei City 106 (TW); Wu, Ray Hua, Da-an Dist , Taipei City 106 (TW)
(72) Inventor: YANG, Hsien Ming, 106, Taipei City (TW); CHEN, Yong Wen, 106, Taipei City (TW)
(74) Representative: Viering, Jentschura & Partner

(57) **Abstract**

An absorptive device to capture carbon dioxide comprising a rotating packed bed (1) includes a sealed housing (11), in which a filler (17) is speedily rotated by a motor (16) . A liquid distributor (18) on the filler (17) center communicates with an absorbent entrance (15) . An air pump (2) impels the air into the housing (11) ; an absorbent reservoir (3) saves an absorbent extruded from an absorbent exit (13) ; a water pump (4) forces the absorbent within the absorbent reservoir (3) into the housing (11). The absorbent flows through the liquid distributor (18) into the filler (17) center; the air enters the center through the filler (17). The absorbent spurts via the centrifugal force created by the super gravity field at a speedy rotation more than 100G to meet the carbon dioxide in the air in the filler (17) center, thence achieving a chemical absorption to absorb carbon dioxide, discharging redundant air from the air exit (14), and recycling the absorbent with the absorption of carbon dioxide in the absorbent reservoir (3).

## Description

### BACKGROUND OF THE INVENTION

### 1. Field of the Invention

The present invention relates to an absorptive device to carbon dioxide in the air, more particularly to a device that substitutes a novel rotating packed bed for the conventional packed column so as to recycle the carbon dioxide with a chemical absorption process.

### 2. Description of the Related Art

The gas of greenhouse has resulted in a serious global warming problem. Wherein, in the greenhouse gas, carbon dioxide (CO2) is in the largest proportion of about 55%. Thus, to decrease and control the amount of the greenhouse gas as well as to develop the processing techniques thereof is definitely a tendency in the world. Accordingly, the present invention would focus on how to efficiently absorb the carbon dioxide in the air.

A chemical absorption process is presently applied to recycle the carbon dioxide. Wherein, the process utilizes an absorbent reacting on the carbon dioxide to cause a chemical reaction and execute the recycling, which further makes use of a reversible reaction to revive the absorbent.

The chemical absorption process is the most efficient means to recycle the carbon dioxide since a removal ratio of the carbon dioxide is higher, and this chemical absorption process is also appropriate to deal with the mixed gas comprising the carbon dioxide of low partial pressure. Especially, this means obtains the purer carbon dioxide, achieves a speedy absorption, and accomplishes good disposal of the considerable gas.

However, the chemical absorption has three shortcomings as follows: **1.** When the solvent reacts on other gas (such as O₂, SOX, or COS) with an irreversible chemical reaction, the recycling times of the absorbent would be decreased to increase an operative cost. **2.** Since most absorbent belong to alkaline solution, the absorbent column, the reviving column, and other pipes would be facilely corroded. **3.** The involved parameters are so variable that the operation thereof is accordingly complicated.

A well-developed technique presently and generally utilizes a packed column to absorb the carbon dioxide. In this conventional packed column, tremendous equipment or an increasing amount of the absorbent is usually required if the absorbent efficiency is desired to be enhanced. However, the cost would be accordingly increased, which is in inconformity with economic benefits as well as unfavorable to the competitiveness in the market.

At present in the year 1981, Ramshaw and Mallinson in English company ICI successfully developed an gas-liquid mass transfer of high efficiency (i.e. the mass transfer between the gas and the liquid). This technique has taken the notice from the industry. Wherein, the device developed by Ramshaw and Mallinson is usually named Rotating Packed Bed, which mainly employs the centrifugal force to speedily rotate the packed bed so as to generate a super gravity field where a high scattering would be created in the liquid to increase the contact area and collision rate of the gas and the liquid. Therefore, the mass transfer efficiency between the gas and the liquid can be promoted to achieve a swift mix, separation, and reaction.

This technique takes the advantages of low liquid flooding, high processing amount, smaller space, high mass transfer efficiency, low energy consumption, decreased investment, and diminished operative cost. This technique could be extensively applied to variable programs like distillation, absorption, gas stripping, and gas flowing reaction that includes a controllable spreading. Therefore, the present invention is suitably applied to not only chemical industry but also the related programs involved in other industries like environmental protection.

The rotating packed bed can be classified into two types: the countercurrent rotating packed bed and the cross-flow rotating packed bed.

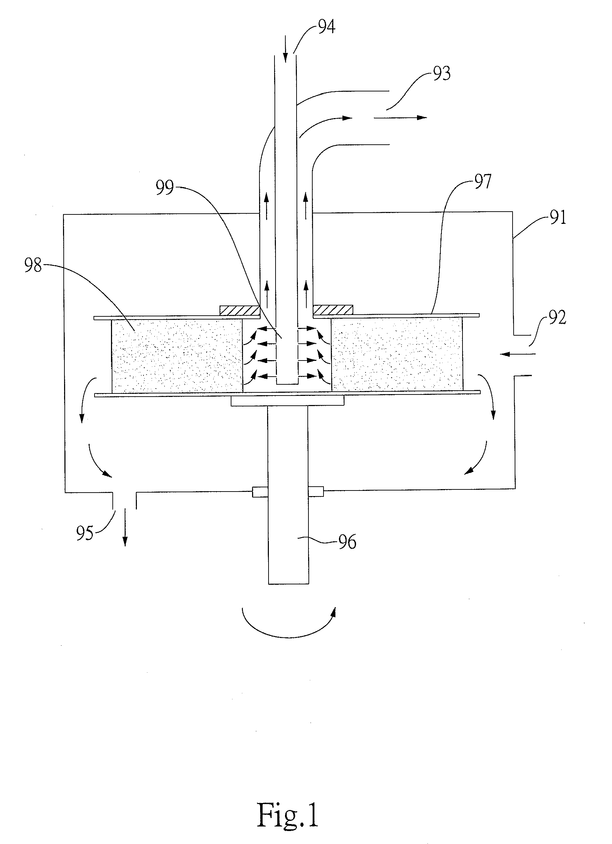

A countercurrent rotating packed bed as shown by Fig. **1** comprises a gas inlet **92** disposed at a side of a sealed housing **91** that disposes a gas outlet **93** as well as a liquid inlet **94** on a top center thereof and installs a liquid outlet **95** on the bottom thereof. Wherein, a spinning tube **97** disposed inside the housing **91** is rotated by a spinning shaft **96,** and the spinning tube **97** is filled with a filler **98.**

Liquid passes from the liquid inlet **94** through a liquid distributor **99** at the end of the pipe and goes into the center of the spinning tube **97.** Gas passes from the gas inlet **92** through the filler **98** and goes into the center of the spinning tube **97.** Thus, the liquid and gas would confluently meet at the center of the spinning tube **97** so as to proceed to a chemical absorption.

However, an inner and an outer circumfluent passages of this countercurrent rotating packed bed have a great differential in the sectional areas, so the gas speed would vary prodigiously. As a result, a resistance to the gas would be increased, and this means is accordingly improper to be applied to the gas-liquid mass transfer of a high gas flow, such as absorption.

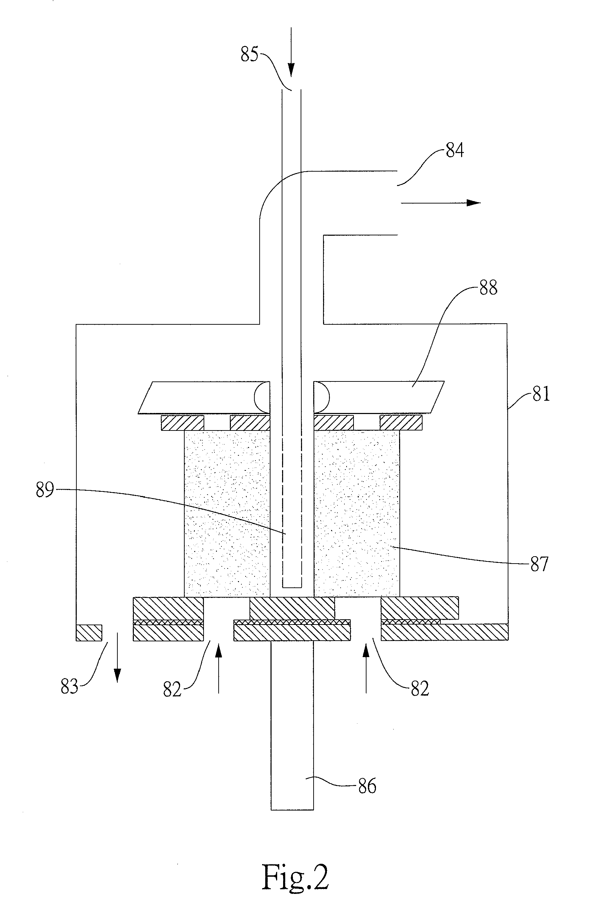

In order to introduce a centrifugal force field to strengthen the mass transfer during the interchange of the gas-liquid mass transfer program applied to high gas flow, some researchers begin to develop the cross-flow rotating packed bed that is different from the countercurrent one. Referring to Fig. **2****,** a plurality of gas inlets **82** and a liquid outlet **83** are disposed at the bottom of a sealed housing **81,** which defines a gas outlet **84** and a liquid inlet **85** on a top center thereof, positions a filler **87** rotated by a spinning shaft **86** therein, and disposes a gas seal shaft **88** above the filler **87.**

Liquid passes from the liquid inlet **85** through a liquid distributor **89** at the end of the pipes and the wires and goes into the center of the filler **87**; gas passes from the gas inlet **82** through the filler **87** and goes into the center. As a result, the liquid and the gas would confluently meet at the center of the filler **87** so as to proceed to a chemical absorption.

Wherein, the sectional area of the gas passage in the cross-flow rotating packed bed is fixed, so the gas speed is consistent. Further, the gas axially flows along the rotating bed without overcoming the centrifugal obstruction so that the gas resistance of the cross-flow type is much lower than that of the countercurrent type. Consequently, the cross-flow rotating packed bed is adapted to the gas-liquid contact program applied with high gas flow, and the disadvantage of an overlarge pressure loss resulted from the frequent utilization of a washing tower can be avoided. Therefore, the energy consumption in operation could be favorably reduced.

Thus, the present invention essentially adopts the benefits of the above two rotating packed beds for preferably increasing the absorptive efficiency while adapting to the absorption of carbon dioxide in the air.

### SUMMARY OF THE INVENTION

The object of the present invention is to provide an absorptive device to carbon dioxide in the air, which can preferably increases an absorptive efficiency thereof.

For preferably solving the above typical problems, the present invention essentially comprises:
a rotating packed bed including a sealed housing that disposes an air entrance and an absorbent exit thereon, an air exit and an absorbent entrance disposed on a top center thereof, a motor with a filler of a high rotational speed disposed therein, and a liquid distributor disposed at a center of the filler for communicating with the absorbent entrance;
an air pump impelling air from the air entrance into the housing;
an absorbent reservoir saving an absorbent extruded from the absorbent exit; and
a water pump impelling the absorbent in the absorbent reservoir from the absorbent entrance into the housing.

In operation, the air pump impels air from the air entrance into the housing, and the absorbent reservoir saves the absorbent extruded from the absorbent exit; the water pump impels the absorbent in the absorbent reservoir from the absorbent entrance into the housing, and the absorbent passes from the absorbent entrance through the liquid distributor at the end of the pipes and wires into the center of the filler; the air passes from the air entrance through the filler into the center thereof. Accordingly, the absorbent would be rotated by a super gravity field generating a centrifugal force at a high speed above 100G for being jetted out so as to meet with the carbon dioxide in the air at the center of the filler. Thereby, a chemical absorption is proceeded to absorb the carbon dioxide in the air, the rest of the gas would be discharged from the air exit, and the absorbent with the absorption of the carbon dioxide would be recycled in the absorbent reservoir.

Thus, since the present invention utilizes the rotating packed bed to carry on the chemical absorption, the related equipment could be minified, and lower energy consumption for transporting the filled absorbent to the top of the conventional packed column could be achieved. By means of the energy reduction of the rotating packed bed, a more competitive application in the market can be accomplished to greatly decrease the cost. Thus, in economic terms, the present invention would be a carbon dioxide eliminating device with high efficiency.

The present invention will become more apparent by reading the following relating drawings.

### BRIEF DESCRIPTION OF THE DRAWINGS

Fig. **1** is a schematic view showing a conventional invention;
Fig. **2** is another schematic view showing a conventional; and
Fig. **3** is a schematic view showing a preferred embodiment of the present invention.

### DETAILED DESCRIPTION OF THE PREFERRED EMBODIMENTS

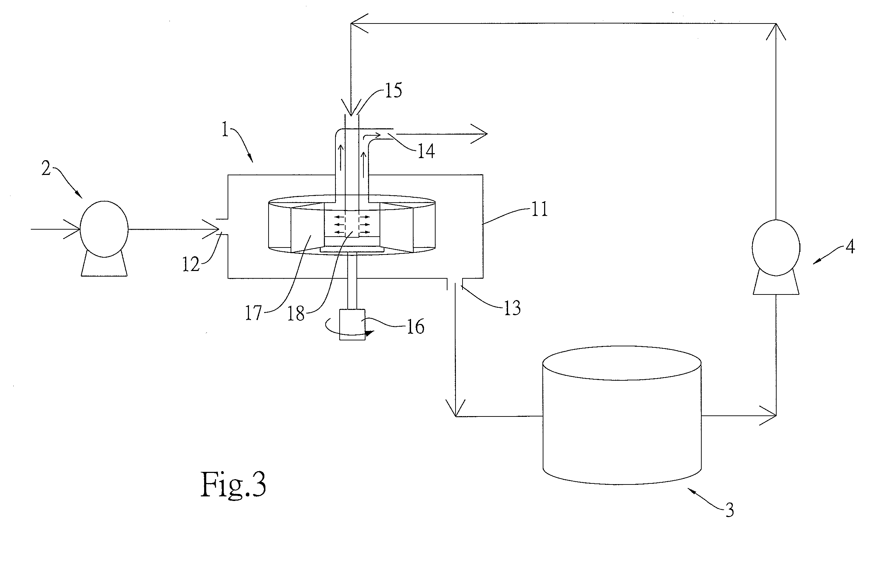

Referring to Fig. **3****,** the present invention essentially comprises a rotating packed bed **1,** an air pump **2,** an absorbent reservoir **3,** and a water pump **4.**

Wherein, the rotating packed bed **1** includes a sealed housing **11** that disposes an air entrance 12 and an absorbent exit **13** thereon. Moreover, an air exit **14** and an absorbent entrance **15** are disposed on a top center of the housing. A motor **16** with a filler **17** of a high rotational speed is disposed inside the housing, and a liquid distributor **18** is disposed at a center of the filler **17** for being in communication with the absorbent entrance.

Further, an air pump **2** impels air from the air entrance **12** into the housing **11,** an absorbent reservoir **3** saves an absorbent extruded from the absorbent exit **13,** and a water pump **4** impels the absorbent in the absorbent reservoir **3** from the absorbent entrance **15** into the housing **11.**

In operation, the absorbent passes from the absorbent entrance **15** through the liquid distributor **18** at the end of the pipes and wires and goes into the center of the filler **17,** and the air passes from the air entrance **12** through the filler **17** and goes into the center thereof. Accordingly, the absorbent would meet the air at the center of the filler **17** so as to proceed to a chemical absorption. Thereby, the carbon dioxide in the air can be absorbed, and the rest of the gas would be discharged from the air exit 15, thus allowing the absorbent that has absorbed the carbon dioxide to be flow back to the absorbent reservoir **3.**

The rotating packed bed **1** of the present invention can adopt the countercurrent rotating packed bed or the cross-flow rotating packed bed.

Table **1** shows the specification and the operative scope of the countercurrent rotating packed bed of the present invention in practice:

**Table 1-the specification and operation of the countercurrent rotating packed bed**

| COUNTERCURRENT ROTATING PACKED BED | OPERATIONAL PARAMETER |
|---|---|
| INNER RADIUS OF THE FILLER Rᵢ (cm) | 2.0 |
| OUTER RADIUS OF THE FILLER Rₒ (cm) | 8.0 |
| AXIAL HEIGHT Z_{b} (cm) | 2.9 |
| APERTURE NUMBER OF THE LIQUID DISTRIBUTOR | 8 |
| CONCENTRATION OF THE ABSORBENT(mol/L) | 0.2∼10 |
| ROTATION RATE OF THE MOTOR(rpm) | 500∼3000 |
| LIQUID FLOW RATE Q_{I} (L/min) | 0.1∼10 |
| AIR FLOW RATE Q_{G} (L/min) | 10∼100 |

When the filler **17** in the rotating packed bed **1** is rotated at a high speed, a powerful centrifugal force is generated in the center to strengthen a gravity field, so that a flow speed and a contact area between the air and the absorbent can be greatly enhanced. Thus, the mass transfer is reinforced and the absorptive efficiency is promoted since a liquid interface could be swiftly updated to contact the gas at an extremely relative velocity occurring in the filler.

Due to the carbon dioxide being acid, an alkaline absorbent is generally selected to be applied. The following Table **2** shows comparisons between various common absorbents and their familiar using methods:
**1.** Potassium carbonate absorption:
   This method is initially developed by a part of a coal synthesized liquid fuel program in America, which essentially employs the potassium carbonate solution to absorb the carbon dioxide to react and generate the potassium hydrogen carbonate. As to the recycling, the potassium carbonate solution with the absorption of the carbon dioxide would be thence heated until the potassium hydrogen carbonate decomposes, thus incurring a reversible reaction, generating the carbon dioxide, and reusing the catalyzed potassium carbonate. This method contributes to the development of a process of active heating potassium carbonate. Namely, the temperature during soaking in the carbon dioxide would be raised to 105∼120°C, and the pressure would be augmented to 2.3MPa. Accordingly, if the absorbent is revived by adopting the method of lowering the pressure under the same temperature, the consequence would contribute to an increased reacting speed and an augmented absorptive capacity. However, the absorptive rate is still slow. Further, since the serious erosion is resulted from the elevated temperature, an activator is commonly added to promote the speeds of absorbing and reviving as well as to lessen the corrosion. Thus, this is so-called active heating potassium carbonate process. Familiar activators include inorganic active agents, such as arsenate, borate, and phosphate, and organic active agents, such as organic amines, aldehyde, ketone, and other organic materials.
**2**. Ethanolamine absorption:
   Ethanolamine commonly includes primary amines, e.g. monoethanolamine (MEA), secondary amines, e.g. diethanolamine (DEA) and diisopropylamine (DIPA), and third amines, e.g. triethanolamine (MDEA) andmethyl-diethanolamine (TEA). Wherein, the primary amines and secondary amines have strong alkaline properties, so they can speedily react with the carbon dioxide. However, the product resulted from the reaction is carbamate; the absorptive capacity is thence limited to 0.5mol-CO₂/Mol-ethanolamine. Additionally, since the third amines have a weaker alkaline property, the speed of the third amines reacting with the carbon dioxide would be reduced, but the absorptive capacity thereof would conduce to 1.0mol-CO₂/mol- ethanolamine. Recently, the sterically hindered amine (AMP) substitutes for the conventional ethanolamine to serve as the absorbent because it has a faster absorptive rate and possesses an absorptive capacity as high as that of the third amines to 1.0mol-CO₂/Mol-ethanolamine. There are also researches on mixed alkanolamine which is made by mixing more than two alkanolamine solutions. Therefore, the blended alkanolamine would possess the advantages from kinds of ethanolamine and achieve the preferable characteristics of a rapid absorptive rate and a high absorptive capacity. The familiar mixed alkanolamine includes MEA-MDEA, MEA-TEA, DEA-MDEA, DEA-TEA, DEA-AMP, MEA-AMP, DEA-TEA-AMP, etc.
**3**. Sodium hydroxide absorption:
   A strong alkaline solution serves as an absorbent. Wherein, the sodium hydroxide is a common chemical solvent, and there are quite many researches issuing about the influence of the sodium hydroxide concentration with the CO₂ absorptive efficiency and also applying the system to compare the different efficacies performed by the gas-liquid contacting the absorber. Besides the sodium hydroxide, LiOH and KOH could also be applied to absorb the carbon dioxide.

**TABLE 2-comparison between the advantages and the disadvantages of various absorbents**

| TYPES OF ABSORBENTS | ADVANTAGES | DISADVANTAGES |
|---|---|---|
| Primary amines MEA | Speedy absorptive rate Reasonable price Little absorptive efficacy on hydrocarbon | Low absorptive capacity Unsuitable for waste gas including COS and CS₂ Subject to corrosion Higher heating capacity Facilely to be poisoned by the SO₂ and O₂ in the flue |
| Secondary amines DEA and DIPA | Speedy absorptive rate Lower corrosiveness Suitable for waste gas including COS and CS₂ Lower heating capacity | Lower absorptive capacity |
| Third amines MDEA and TEA | Higher absorptive capacity Lower heating capacity Selective absorption to H₂S Preferable gas stripping property | Dilatory absorptive rate |
| STERICALLY HINDERED AMINE AMP and PZ | Higher absorptive capacity Speedy absorptive rate Preferable gas stripping property Higher selective absorption to H₂S | Higher heating capacity |
| Strong alkaline NaOH, KOH, and LiOH | Preferable removal ratio | Expensiveness irreversible solvent |
| Weak alkaline, like ammonia NH4OH | Reasonable price | Lower absorptive rate |

Chemical absorption process is capable of utilizing different types of absorbents or alternatively cooperating with some activator to promote the speed of the carbon dioxide absorption, so that the absorptive rate on the carbon dioxide can be correspondingly increased. Common activator includes inorganic active agent, such as arsenate, borate, and phosphate, and organic active agent, such as organic amine, aldehyde, ketone, and other organic material.

Wherein, the present invention also adopts the abovementioned common absorbent, activator, and absorption process.

The following depiction focuses on the experiment on the alkanolamine serving as an absorbent to absorb the carbon dioxide applied to the present invention.

Firstly, a well set concentration of the alkanolamine (0.2 to 10mol/L) is applied to operate. Wherein, the air passes from the air pump **2** to be impelled into the countercurrent rotating packed bed **1,** flows along the outer periphery of the filler **17** into the interior of the filler **17,** and discharges from the air exit **14** above the filler **17,** thus rendering a carbon dioxide analytic device to measure the concentration on the exit.

Secondly, the motor **16** is turned on to rotate the filler **17** in the rotating packed bed **1,** so that the alkanolamine would be pumped into the absorbent entrance **15** above the filler **17** via the water pump **4.** Whereby, the liquid gushes into the center of the filler **17** through the apertures defined on the liquid distributor **18,** so that the alkanolamine would generate an expelled liquid toward the housing **11** by a super gravity field that is more than 100G via the centrifugal force generated by a rotation. Consequently, the liquid would be released from the opening at the bottom to the absorbent reservoir **3.** As a result, the alkanolamine could continue to absorb the carbon dioxide in the air through a cyclic model.

The alkanolamine and the carbon dioxide would proceed to the mass transfer in the filler **17** via the countercurrent means. In time of the gush created by the rotation in the super gravity field, the liquid would be cut into fine liquid drops and liquid films through the filler. Concurrently, the gas would contact the liquid by upward flowing from the bottom of the filler **17,** so that the objective of absorbing the carbon dioxide is achieved. At last, by measuring the concentration at the air entrance **13** and exit **15,** the removal ratio of the carbon dioxide can be consequently calculated.

The carbon dioxide in the air (of the concentration about 400 to 1000 ppm) in this experiment is absorbed by the alkanolamine in diverse concentrations. Under the conditions involving distinct operative variables (like the concentration of the absorbent, RPB rotating speed, liquid flow rate, and gas flow rate), the experiment shows the variable performances of the CO2 concentration at the air entrance and exit via divergent operative scopes.

Applying the parameters in table **1** to measure the CO2 concentrations at both air entrance and exit, we can calculate the removal ratio of CO2, thereby acquiring a preferable CO2 absorptive efficiency via different operative parameters. Table 3 shows one of the experimental results of the present invention:

**Table 3-related information in the experiment**

| OPERATIVE CONDITIONS | OPERATING TEMPERATURE: 25 TO 30°C |
|---|---|
| | OPERATING PRESSURE: 1 atm |
| | CO2 CONCENTRATION: 470 ppm |
| CONCENTRATION OF THE ABSORBENT LIQUID | 0.1 mol/L |
| AIR FLOW RATE | 10 L/min |
| ABSORBENT LIQUID FLOW RATE | 0.2 L/min |
| ROTATIONAL SPEED | 1800 rpm |
| CO2 ABSORPTIVE EFFICIENCY | 86.11 % |

It can be concluded from the above experimental result that the absorptive device to carbon dioxide in the air of the present invention preferably achieves the high carbon dioxide absorbing efficiency. Thus, the present invention entirely meets the requirement regulated in the Patent Law, thus the applicant respectfully submits an application to the Patent Office.

## Claims

1. An absorptive device to carbon dioxide in the air, **characterized in that** said device comprising:
a rotating packed bed **(1)** including a sealed housing **(11)** that defines an air entrance **(12)** and an absorbent exit (13) thereon, an air exit **(14)** and an absorbent entrance **(15)** on a top center thereof, and a motor **(16)** with a filler **(17)** of a high rotational speed therein; wherein, a liquid distributor **(18)** being disposed at a center of said filler **(17)** for being in communication with said absorbent entrance (15);
an air pump **(2)** impelling air from said air entrance **(12)** into said housing (11);
an absorbent reservoir **(3)** saving an absorbent extruded from said absorbent exit **(13);** and
a water pump **(4)** impelling said absorbent in said absorbent reservoir **(3)** from said absorbent entrance **(15)** into said housing **(11).**

2. The absorptive device as claimed in claim 1, wherein, said absorbent adopts a group that includes alkanolamine, a strong alkaline solution, and a weak alkaline solution.

3. The absorptive device as claimed in claim 2, wherein, said alkanolamine adopts a group that includes primary amines, secondary amines, third amines, sterically hindered amine, and a combination of the previous.

4. The absorptive device as claimed in claim 2, wherein, said strong alkaline solution adopts a group that includes sodium hydroxide, potassium hydroxide, and lithium hydroxide.

5. The absorptive device as claimed in claim 2, wherein, said weak alkaline solution adopts ammonia.

6. The absorptive device as claimed in claim 2, wherein, an activator is added into said absorbent to increase a rate of absorbing carbon dioxide.

7. The absorptive device as claimed in claim 6, wherein, said activator adopts a group that includes an inorganic active agent and an organic active agent.

8. The absorptive device as claimed in claim 7, wherein, said inorganic active agent adopts a group that includes arsenate, borate, and phosphate.

9. The absorptive device as claimed in claim 7, wherein, said organic active agent adopts a group that includes organic amines, and organic aldehyde and ketone.

10. The absorptive device as claimed in claim 1, wherein, said rotating packed bed adopts a countercurrent rotating packed bed.

11. The absorptive device as claimed in claim 10, wherein, an inner radius of said filler of said rotating packed bed is 2.0cm, an external radius is 8.0cm, and an axial height is 2.9cm; said liquid distributor (18) has 8 apertures; a concentration of said absorbent entrance (15) is 0.2 to 10mol/L, a flow rate is 0.1 to 10L/min, a rotational speed of said motor **(16)** is 500 to 3000 rpm, and an air flow rate is 10 to 100L/min.

12. The absorptive device as claimed in claim 1, wherein, said rotating packed bed (1) adopts a cross-flow rotating packed bed.
